# EUROPEAN PATENT SPECIFICATION

(11) **EP 2 975 988 B1**
(45) Date of publication and mention of the grant of the patent: **22.03.2017**
(21) Application number: 13728531.8
(22) Date of filing: 29.04.2013
(51) Int. Cl.: A47J 47/18, B65D 21/08

(54) **BUCKET**
EIMER
SEAU

(30) Priority: 18.03.2013 IT PD20130067
(43) Date of publication of application: 27.01.2016
(73) Proprietor: Arcasa S.r.l., 35018 San Martino Di Lupari (PD) (IT)
(72) Inventor: SARTOR, Cristian, 35018 San Martino Di Lupari (PD) (IT)
(74) Representative: Vinci, Marcello
(86) International application number: PCT/IB2013/053375
(87) International publication number: WO 2014/147454

(56) References cited:
- WO-A1-2006/068523
- WO-A1-2012/164411
- FR-A- 1 124 843

## Description

The present patent relates to buckets for liquids and in particular concerns a new expandable and retractable bucket.

Buckets used for holding and transporting fluids and loose material in general are well known.

Buckets are generally in the shape of a truncated cone, with a circular base, or a rectangular base, or with two opposite curved sides and two opposite substantially linear sides.

Buckets with a rectangular base are more practical to store in a closet or in a storage area for cleaning materials and products.

Buckets with a rectangular base are commonly used with current cleaning devices called mops, that is, devices comprising a handle at the end of which is a fixed mass composed of strips of fabric. The mass of strips is fixed to the concave surface of a rigid support cap equipped, on its convex surface, with a screw or pressure coupling for fastening to the end of the handle.

In the case of buckets for use with mops, they comprise an accessory, to be applied on the upper rim of the bucket, to wring the mop.

Some known buckets have fixed dimensions, whether they are filled or empty. Document WO-A1-2012/16441 discloses an expandable-retractable bucket according to the preamble of claim 1.

The object of the present patent is a new expandable-retractable bucket.

One purpose of the new bucket is to reduce its dimensions when not in use and to enable its use in various sizes depending on the amount of water needed.

Another purpose of the new bucket is to allow the application on its upper rim of an accessory to wring the mop.

These and other aims, direct and complementary, are achieved by the new expandable-retractable bucket according to claim 1.

In particular the new bucket comprises a series of rigid polypropylene lateral strips alternating with a series of silicone rubber folding bellows strips.

The rigid lateral strips, made of rigid and resistant plastic material, have a generally rectangular vertical strip shape and are suited to form the wall of the bucket.

The folding bellows strips, made of flexible plastic material or silicone rubber, have a generally rectangular vertical strip shape and are suited to form the wall of the bucket.

According to the new solution, the rigid lateral strips and the folding bellows strips are positioned alternately one after another so as to realize a complex wall of a bucket which can vary from an expanded to a retracted position.

The folding bellows strips are able to be expanded and to establish a greater contact surface, or they can be retracted to decrease the contact surface and therefore the size and capacity of the bucket. In this way the user can adjust the size and the amount of water or other liquid transportable in the bucket by extending or retracting the folding bellows strips.

In the preferred embodiment the bucket comprises various U-shaped elements each formed by two opposing rigid vertical lateral strips and by a horizontal rigid bottom strip. Each of these U-shaped elements is spaced from another rigid U-shaped element through a U-shaped folding bellows strip also comprising two folding vertical lateral strips and a folding horizontal bottom.

In a practical embodiment the bucket comprises two rigid head walls suitably curved and each equipped with the corresponding rigid bottom.

The upper edge of each rigid lateral strip or vertical folding bellows strip is folded and/or thickened to reinforce the rim of the bucket.

Furthermore, the upper edge of each rigid lateral strip is folded and/or thickened to reinforce the rim of the bucket, to form the coupling for the handle, and to provide a support for a mop wringing accessory.

When the new bucket is not being used its dimensions can be reduced by compressing the folding bellows strips toward the rigid lateral strips. This movement requires each folding bellows strip, joined to two rigid lateral strips, to fold up in whole or in part resting on the rigid lateral strips and constituting in this way a continuous reduced surface of the new bucket.

In this reduced configuration the new bucket has smaller overall dimensions.

Any mop wringing accessory is applied on the upper edges of the rigid lateral strips. When the folding bellows strips are expanded, the rigid head walls still allow the support of the wringing accessory and the folding bellows strips do not hinder the introduction of the mop head.

The characteristics of the new bucket will be better explained in the following description with reference to the drawings, attached by way of a non-limiting example.

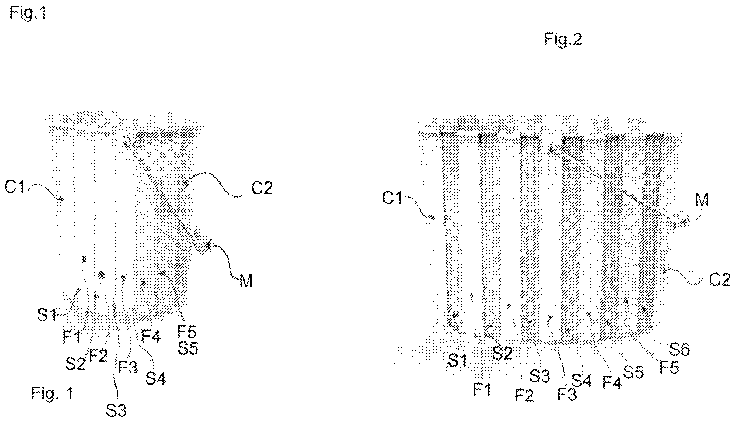

Figures 1 and 2 show a view of the new bucket in the retracted mode and a view of the new bucket in the expanded mode.

In particular, Figure 1 shows the new bucket comprising at least two rigid head walls C1 and C2, a bottom, a rim G, a handle M and a series of U-shaped elements or strips F.

These U-shaped elements comprise a series of rigid strips F1, F2, F3, F4, F5, and a series of folding bellows strips S1, S2, S3, S4, S5, S6 fixed in an alternating manner.

The U-shaped folding bellows strips S1, S2, S3, S4, S5, S6 are shown in retracted mode, and thus the rigid strips F1, F2, F3, F4, F5 are closer together resulting in a bucket with smaller dimensions.

Figure 2 shows a bucket comprising a series of rigid U-shaped strips, F1, F2, F3, F4, F5 alternating with a series of U-shaped folding bellows strips, S1, S2, S3, S4, S5, S6. These rigid strips F1, F2, F3, F4, F5 alternate with the fording bellows strips S1, S2, S3, S4, S5, S6 and are connected to at least two rigid head walls C1 C2.

These U-shaped folding bellows strips, S1, S2, S3, S4, S5, S6 are shown in the expanded position, therefore the rigid strips are distributed so as to form a bucket of larger dimensions.

Figure 3 shows the expandable bucket supporting the mop-wringing accessory G applied on the upper edge of the rigid lateral strip C1 or C2.

When the new bucket is not in use its dimensions can be reduced by compressing said U-shaped folding bellows strips, S1, S2, S3, S4, S5, S6 toward the U-shaped rigid lateral strips, F1, F2, F3 , F4, F5. This movement means that the U-shaped folding bellows strip, S1, S2, S3, S4, S5, S6, joined to the U-shaped rigid lateral strips, F1, F2, F3, F4, F5, fold up in whole or in part resting on the U-shaped rigid lateral strips, F1, F2, F3, F4, F5.

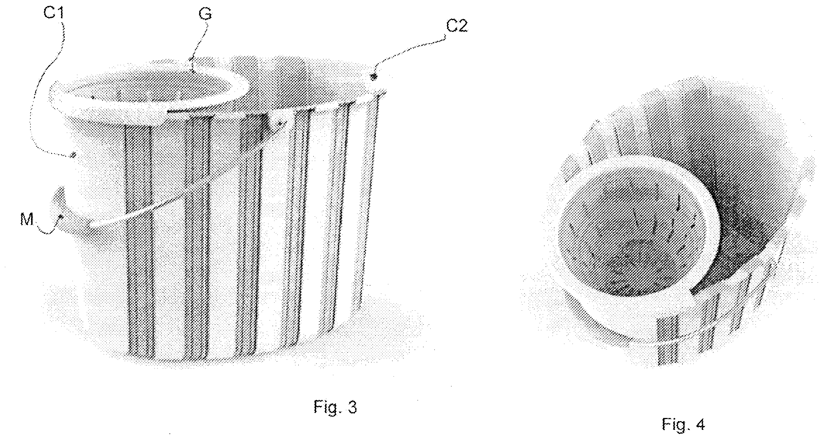

Figure 4 shows a top view of the open bucket.

Two coupling points for the ends of the handle M for the transport of the new bucket are provided for on the upper edge of two rigid vertical lateral strips. Therefore, with reference to the preceding description and the attached drawings, the following claims are made.

## Claims

1. Bucket, comprising two head walls, one or more rigid lateral and bottom strips (F1, F2, F3, F4, F5) and two or more folding lateral and bottom bellows strips (S1, S2, S3, S4, S5, S6), wherein said rigid lateral and bottom strips (F1, F2, F3, F4, F5) are positioned and welded alternately to said folding bellows strips (S1, S2, S3, S4, S5, S6), and wherein said folding bellows strips (S1, S2, S3, S4, S5, S6) can be expanded or retracted and are suited to make a bucket that can change its configuration from retracted to expanded, wherein the retracted configuration is adopted by
compressing the folding bellows strips (S1, S2, S3, S4, S5, S6) towards the rigid lateral strips (F1, F2, F3, F4, F5), so that each folding bellows strip (S1, S2, S3, S4, S5, S6), joined to two rigid lateral strips (F1, F2, F3, F4, F5), folds up in whole or in part resting on the rigid lateral strips (F1, F2, F3, F4, F5) constituting in this way a continuous reduced surface of the new bucket, **characterized in that** in the retracted configuration the upper edges of each rigid strip (F1, F2, F3, F4, F5) are close and coplanar to the adjacent rigid strip (F1, F2, F3, F4, F5).

2. Bucket according to claim 1, **characterized in that** it comprises at least two rigid head walls (C1, C2) with the edges facing inwards.

3. Bucket according to claims 1 and 2, **characterized in that** it comprises U-shaped elements, each one of which is formed by two opposing rigid vertical lateral strips (F1, F2, F3, F4, F5) and by a horizontal rigid bottom strip, and wherein each one of said U-shaped elements is spaced from another rigid U-shaped element through a U-shaped bellows folding strip (S1,S2, S3, S4, S5, S6) comprising two folding vertical lateral strips and a folding horizontal bottom.

4. Bucket according to claims 1, 2 and 3, **characterized in that** the upper edge of the rigid lateral strips (F1, F2, F3, F4, F5) and of the folding bellows strips (S1,S2, S3, S4, S5, S6) is folded and/or thickened in such a way as to reinforce the rim (G) of the bucket and provide a support for any wringing accessory (Q).

5. Bucket according to claims 1, 2, 3 and 4, **characterized in that** in proximity to the rim there are two coupling points for the insertion of the ends of a handle (M).

## Patentansprüche

1. Eimer, zwei Kopfwände, einen oder mehrere starre Seiten- und Bodenstreifen (F1, F2, F3, F4, F5) und zwei oder mehrere Seiten- und Bodenfaltenbalgstreifen (S1, S2, S3, S4, S5, S6) umfassend, wobei die besagten starren Seiten- und Bodenstreifen (F1, F2, F3, F4, F5) im Wechsel an den besagten Faltenbalgstreifen (S1, S2, S3, S4, S5, S6) positioniert und angeschweißt sind, und wobei die besagten Faltenbalgstreifen (S1, S2, S3, S4, S5, S6) ausgezogen oder zusammengezogen sein können und geeignet sind, einen Eimer zu bilden, der seine Konfiguration von zusammengezogen auf ausgezogen ändern kann, wobei die zusammengezogene Konfiguration durch Zusammendrücken der Faltenbalgstreifen (S1, S2, S3, S4, S5, S6) zu den starren Seitenstreifen (F1, F2, F3, F4, F5) hin erzielt wird, so dass jeder mit zwei starren Seitenstreifen (F1, F2, F3, F4, F5) verbundene Faltenbalgstreifen (S1, S2, S3, S4, S5, S6) sich ganz oder teilweise zusammenfaltet und auf den starren Seitenstreifen (F1, F2, F3, F4, F5) aufliegt und auf diese Weise eine durchgehende, verkleinerte Oberfläche des neuen Eimers bildet, **dadurch gekennzeichnet, dass** die oberen Kanten jedes starren Streifens (F1, F2, F3, F4, F5) in der zusammengezogenen Konfiguration nahe und koplanar zu dem daneben liegenden Streifen (F1, F2, F3, F4, F5) sind.

2. Eimer gemäß Patentanspruch 1, **dadurch gekennzeichnet, dass** er wenigstens zwei starre Kopfwände (C1, C2) umfasst, deren Kanten nach innen gerichtet sind.

3. Eimer gemäß den Patentansprüchen 1 und 2, **dadurch gekennzeichnet, dass** er U-förmige Elemente umfasst, von denen jedes durch zwei einander gegenüberliegende starre, senkrechte Seitenstreifen (F1, F2, F3, F4, F5) und durch einen waagerechten starren Bodenstreifen gebildet ist und wobei jedes der besagten U-förmigen Elemente von einem anderen U-förmigen Element getrennt ist durch einen anderen U-förmigen Faltenbalgstreifen (S1,S2, S3, S4, S5, S6), der zwei senkrechte, faltbare Seitenstreifen und einen waagerechten, faltbaren Boden umfasst.

4. Eimer gemäß den Patentansprüchen 1, 2 und 3, **dadurch gekennzeichnet, dass** die obere Kante der starren Seitenstreifen (F1, F2, F3, F4, F5) und der Faltenbalgstreifen (S1, S2, S3, S4, S5, S6) so gefaltet und/oder verdickt ist, dass sie den Rand (G) des Eimers verstärkt und eine Halterung für ein jegliches Wringzubehör (Q) bildet.

5. Eimer gemäß den Patentansprüchen 1, 2, 3 und 4, **dadurch gekennzeichnet, dass** sich in der Nähe zum Rand zwei Kupplungspunkte zum Einsetzen der Enden eines Griffs (M) befinden.

## Revendications

1. Seau, comprenant deux parois de tête, une ou plusieurs bandes rigides, latérales et de fond ( F1, F2, F3, F4, F5) et deux ou plusieurs bandes latérales pliables et de fond à soufflet (S1, S2, S3, S4, S5, S6), où lesdites bandes rigides, latérales et de fond (F1, F2, F3, F4, F5) sont positionnées et soudées alternativement auxdites parois à soufflet pliables (S1, S2, S3, S4, S5, S6), et où lesdites bandes à soufflet pliables (S1, S2, S3, S4, S5, S6) peuvent être étendues ou rentrées et sont aptes à réaliser un seau qui peut varier sa configuration d une position étendue à une position rentrée, où la configuration rentrée est adoptée en comprimant les bandes à soufflet pliables (S1, S2, S3, S4, S5, S6) vers les bandes latérales rigides (F1, F2, F3, F4, F5) de façon à ce que chaque bande à soufflet pliable (S1, S2, S3, S4, S5, S6), reliée à deux bandes latérales rigides (F1, F2, F3, F4, F5), se replie entièrement ou en partie en s appuyant contre les bandes latérales rigides (F1, F2, F3, F4, F5) en constituant de cette manière une surface réduite continue du nouveau seau, **caractérisé en ce que** dans la configuration rentrée les bords supérieurs de chaque bande rigide (F1, F2, F3, F4, F5) sont fermées et coplanaires avec la bande rigide adjacente (F1, F2, F3, F4, F5).

2. Seau selon la revendication 1, **caractérisé en ce qu** il comprend au moins deux parois rigides de tête (C1, C2) avec les bords tournés vers l intérieur.

3. Seau selon les revendications 1 et 2, **caractérisé en ce qu** il comprend des éléments en U chacun formé par deux bandes latérales, verticales, rigides, opposées (F1, F2, F3, F4, F5) et par une bande de fond rigide et horizontale, et où chacun desdits éléments en U est espacé d un autre élément en U au moyen d une bande à soufflet pliable en U (S1,S2, S3, S4, S5, S6) comprenant deux bandes latérales, verticales et pliables et un fond horizontal repliable.

4. Seau selon les revendications 1, 2 et 3, **caractérisé en ce que** le bord supérieur des bandes latérales rigides (F1, F2, F3, F4, F5) et des bandes à soufflet pliables (S1,S2, S3, S4, S5, S6) est replié et/ou épaissi de manière à renforcer le rebord (G) du seau et à fournir un appui pour un éventuel accessoire de torsion (Q).

5. Seau selon les revendications 1, 2, 3 et 4, **caractérisé en ce qu** à proximité du rebord se trouvent deux points d accouplement pour l introduction des extrémités d un manche (M).
